# EUROPEAN PATENT APPLICATION

(11) **EP 4 393 891 A1**
(43) Date of publication of application: **03.07.2024**
(21) Application number: 23218150.3
(22) Date of filing: 19.12.2023
(51) Int. Cl.: C02F 9/20, B01D 61/02, C02F 1/28, C02F 1/32, C02F 1/42, C02F 1/44, C02F 103/04

(54) **APPARATUS AND METHOD FOR REDUCING TOTAL ORGANIC CARBON IN A FLUID**

(30) Priority: 30.12.2022 US 202263477868 P
(71) Applicant: Thermo Orion Inc., Chelmsford, MA 01824 (US)
(72) Inventor: SRINIVASAN, Kannan, Chelmsford (US); RASMUSON, Anders, Worcester (US); ZHAO, Ran, Chelmsford (US)
(74) Representative: Boult Wade Tennant LLP

(57) **Abstract**

A water purification module configured to reduce the total organic content of water that flows through a water flow path of a water purification system between an inlet and a first point of use dispenser. The water purification module defines a first recirculation water flow path loop in the water flow path that is in fluid communication with, and forms part of, the water flow path of the water purification system. The water purification module includes a pump, an ultraviolet radiation treatment device, and a tank fluidly connected in the first recirculation water flow path loop such that water that enters the inlet to the water flow path of the water purification system is circulated one or more times through the first recirculation water flow path loop of the water purification module by the pump to generate purified water having a reduced total organic content. The purified water is selectively dispensable from the water purification system at the first point of use dispenser.

## Description

### TECHNICAL FIELD

The present invention relates generally to purification of water and, more particularly, to an apparatus and methods for producing high-purity, laboratory-quality water.

### BACKGROUND

Water purification systems are used to provide high quality laboratory or reagent grade water for various applications, including the field of scientific testing and analysis. Many of these applications require that the total organic carbon ("TOC") of the water be on the order of 10 parts-per-billion ("ppb") or less. As set forth by the American Society for Testing and Materials ("ASTM"), ASTM Type I water is the highest purity and is used for high performance liquid chromatography ("HPLC"), atomic absorption spectrometry, tissue culture, etc. ASTM Type II water is less pure and may be used for hematological, serological, and micro biological procedures. ASTM Type III water is suitable for general laboratory qualitative analyses, such as urinalysis, parasitology and histological procedures. While these standards are intended to layout allowed limits of contaminants, in the ideal state water should only comprise of hydronium and hydroxide ions in equilibrium with neutral water molecules. Some level of carbon dioxide dissolved into the water is a common occurrence. The organics present in water also needs quantitation as this can impact the quality of the water. For consistency purposes and the purposes of blanks it is therefore important to keep the level of ionic contaminants and the level of organic contaminants to the minimum.

One conventional technique for purifying water is distillation that vaporizes the feed water and then traps and condenses steam for removing ions to generate high-purity product water. This type of water can be of the highest purity and is usually used by users who desire low levels of inorganic ions and organic contaminants in water. Another conventional technique for purifying water is reverse osmosis ("RO"), which relies upon selective permeation through a thin, porous membrane to produce high-purity product water depleted of ions but has residual ionic content that precludes this water to be designated as Type I.. Yet another conventional technique for purifying water is deionization ("DI"), which passes a stream of feed water through an ion exchange resin bed containing a material having functional groups capable of removing ions. Yet another conventional technique for purifying water is electro-deionization ("EDI"), which applies an electric field across an ion exchange resin bed. Water provided to an EDI unit requires pretreatment by an RO device and, if the feed water is particularly hard, may require softening by a water softener.

The above-described purification techniques are usually combined for providing product water having the requisite purity for use as laboratory-quality or reagent grade water. For example, a conventional water purification system of one design may employ established technology of reverse osmosis ("RO") followed by a combination of an ultraviolet ("UV") radiation treatment device and point of use polisher column(s) that include a combination of ion exchangers, carbon particles, and filters in one or more packed bed columns to achieve TOC levels of up to about 5 ppb. Because water in the purification system cannot be stagnant for a long period of time in any portion of the water purification system, water is continuously recirculated through at least the UV treatment module and the point of use polisher column(s).

Although point of use polisher columns are used to minimize the ionic contaminants and organic, they tend to leach contaminates (otherwise referred to as leachates) out into the water and therefore increase the TOC levels of the water. More particularly, the packed beds of the polishing columns leach out organics due to the limited hydrolytic stability of the exchangers. As a result of the water being continuously recirculated through the water purification system and the packed beds, there is a continuous accumulation of leachates in the water from the packed beds. The UV treatment device, however, is not efficient enough to keep up with the introduction of organics into the water stream via the packed beds. As a result, prior art water purification systems, which are tailored for removing ionic contaminants, are unable to produce on a consistent basis water having TOC levels 2 ppb or less, e.g., for HPLC or the dissolution of pharmaceutical tablets or in preparing standards required for TOC analysis.

In view of the above problems noted in prior art water purification systems, as well as other problems and concerns, there is a need to provide a water purification module that forms part of a water purification system that is configured to recirculate water through at least a UV radiation treatment device while circumventing or minimizing water recirculation through the point of use polisher columns, except for when the water is dispensed from the system, to thereby produce water having TOC levels of 2 ppb or less on a consistent basis.

### SUMMARY

The present invention overcomes the foregoing and other shortcomings and drawbacks of conventional water purification modules and systems. Although the present invention will be discussed in connection with certain embodiments, it will be understood that the present invention is not limited to the specific embodiments described herein.

According to one embodiment of the present invention, a water purification module configured to reduce the total organic content of water that flows through a water flow path of a water purification system between an inlet and a first point of use dispenser is provided. The water purification module defines a first recirculation water flow path loop in the water flow path that is in fluid communication with, and forms part of, the water flow path of the water purification system. The first recirculation water flow path loop can be free of (and preferably is free of) ion exchange media. The water purification module includes a pump, an ultraviolet radiation treatment device, and a tank fluidly connected in the first recirculation water flow path loop such that water that enters the inlet to the water flow path of the water purification system is circulated one or more times through the first recirculation water flow path loop of the water purification module by the pump to generate purified water having a reduced total organic content. The purified water is selectively dispensable from the water purification system at the first point of use dispenser.

According to another embodiment of the present invention, a water purification system for purifying water flowing through a water flow path between an inlet and at least a first point of use dispenser and a second point of use dispenser is provided. The water purification system includes a reverse osmosis device, a pump, an ultraviolet radiation treatment device, at least one packed bed device, a filtration device such as an ultrafiltration device, and a tank fluidly connected in the water flow path. It should be understood that the filtration device can be an ultrafiltration device, but this is not a requirement, as other filtration devices besides ultrafiltration devices are suitable. Further, it should be understood that the filtration device is optional. Although the disclosure describes example orders of placement of the various elements, it should be understood that the placement of the various elements described can be changed. The water purification system further includes a first recirculation water flow path loop that forms part of the water flow path of the water purification system and which is defined by water flow being circulated one or more times through the pump, the ultraviolet radiation treatment device, the first point of use dispenser, and the tank, in series, and a second recirculation flow path loop that forms part of the water flow path of the water purification system and which is defined by water flow being circulated one or more times through the pump, the ultraviolet radiation treatment device, the first point of use dispenser, the at least one packed bed filter device, the filtration device (when present), the second point of use dispenser, and the tank, in series. It should be understood that the first point of use dispenser can include a filtration device, which filtration device can be a membrane based or porous polymer based or fiber or tube-based filter. The second point of use dispenser can also include a filtration device, which filtration device can also be a membrane based or porous polymer based or fiber or tube-based filter a filter. For this reason, it is optional to have present a separate filtration device, as in a dispenser and the dispenser can comprise a point of use (POU) filtration device. To this end, water flow through the first recirculation flow path loop can bypass the at least one packed bed filter device, the filtration device (when present), and the second point of use dispenser of the second recirculation flow path loop. The first recirculation flow path loop can be free of (and preferably is free of) ion exchange media.
Further aspects of the present disclosure as set forth in the following numbered clauses:-
Clause 1. A water purification system for purifying water flowing through a water flow path between an inlet and at least a first point of use dispenser and a second point of use dispenser, comprising:
   a reverse osmosis device, a pump, an ultraviolet radiation treatment device, at least one packed bed filter device, a filtration device, and a tank fluidly connected in the water flow path;
   a first recirculation water flow path loop that forms part of the water flow path of the water purification system downstream of the reverse osmosis device and being defined by water flow being circulated one or more times through the pump, the ultraviolet radiation treatment device, the first point of use dispenser, and the tank, in series; and
   a second recirculation water flow path loop that forms part of the water flow path of the water purification system and defined by water flow being circulated one or more times through the pump, the ultraviolet radiation treatment device, the first point of use dispenser, the at least one packed bed filter device, the filtration device, the second point of use dispenser, and the tank, in series;
   wherein water flow through the first recirculation flow path loop bypasses the at least one packed bed filter device,
Clause 2. The water purification system of clause 1, wherein water dispensed from the first point of use dispenser is water having a total organic content of less than 10 parts-per-billion. Clause 3. The water purification system of clause 1, wherein water dispensed from the second point of use dispenser is ASTM Type I water having a total organic content of less than 3 parts-per-billion.
Clause 4. The water purification system of clause 1, wherein the water flow path of the water purification system further comprises a distribution section configured to distribute the flow of water flowing through the water flow path between the first recirculation water flow path loop and the second recirculation water flow path loop.
Clause 5. The water purification system of clause 4, wherein the distribution section comprises an inlet in fluid communication with an outlet of the ultraviolet radiation treatment device, a first outlet in fluid communication with an inlet to the tank, and a second outlet in fluid communication with an inlet to the at least one packed bed filter device.
Clause 6. The water purification system of clause 4, further comprising a first valve fluidly connected in the first recirculation water flow path loop for routing the flow of water through the first recirculation water flow path loop.
Clause 7. The water purification system of clause 6, wherein the first valve is disposed downstream from the distribution section for controlling the flow of water through the first recirculation water flow path loop without interrupting the flow of water through the second recirculation water flow path loop.
Clause 8. The water purification system of clause 7, further comprising a second valve fluidly connected in the second recirculation water flow path loop for controlling flow of water through the second recirculation water flow path loop.
Clause 9. The water purification system of clause 8, wherein the second valve is disposed downstream from the distribution section for controlling the flow of water through the second recirculation water flow path loop without interrupting the flow of water through the first recirculation water flow path loop.
Clause 10. The water purification system of clause 1, wherein the duration of water recirculation time through the second recirculation water flow path loop is no greater than 0.9 times the duration of water recirculation time through the first recirculation water flow path loop.
Clause 11. The water purification system of clause 1, wherein water flows through the reverse osmosis device before flowing through the first recirculation water flow path loop and the second recirculation water flow path loop.
Clause 12. The water purification system of clause 1, wherein the first recirculation water flow path loop defines a water purification module configured to reduce a total organic content of water flowing therethrough.
Clause 13. The water purification system of clause 1, further comprising a controller configured to modulate water flow within the module.
Clause 14. A water purification module, the water purification module, comprising:
   a water flow path having an inlet, the inlet being configured to receive input water,
   the water flow path comprising a first recirculation water flow path loop, the first recirculation flow path loop comprising a pump, an ultraviolet radiation treatment device, and a tank,
   the first recirculation flow path loop optionally being free of ion exchange media, optionally a first point of use dispenser in fluid communication with the first recirculation flow path loop,
   the water purification module being configured for operation such that input water that enters the inlet circulates at least one through the first recirculation water flow path loop so as to generate a first water, the first water having a reduced total organic content,
   the operation optionally being performed without exposing water that enters the inlet to a polisher column.
Clause 15. The water purification module of clause 14, wherein the water purification module is configured for operation such that input water that enters the inlet is from the outlet of one or both of a pretreatment system and a reverse osmosis unit.
Clause 16. The water purification module of clause 14, wherein the water purification module is configured for operation such that input water that enters the inlet is communicated to the tank.
Clause 17. The water purification module of clause 14, wherein the water purification module is configured for operation so as to dispense the first water at the first point of use dispenser.
Clause 18. The water purification module of any one of clauses 14-17, further comprising a total organic carbon detector upstream of the first point of use dispenser.
Clause 19. The water purification module of any one of clauses 14-18, wherein the water purification module is configured for operation so as to retain the first water in the tank.
Clause 20. The water purification module of any one of clauses 14-19, further comprising a second recirculation water flow path loop, the second recirculation flow path loop comprising a polisher column configured to receive first water from the first recirculation flow path and polish the first water to give rise to a second water having reduced conductivity, and the second recirculation flow path loop being in fluid communication with the tank.
Clause 21. The water purification module of clause 20, wherein the second recirculation flow path loop is in interruptable fluid communication with the first recirculation flow path loop, the interruptable fluid communication optionally being modulated by a valve.
Clause 22. The water purification module of any one of clauses 20-21, wherein the second recirculation flow path comprises a filtration device.
Clause 23. The water purification module of any one of clauses 20-22, wherein the second recirculation flow path comprises a second point of use dispenser.
Clause 24. The water purification module of clause 23, further comprising (a) a water conductivity sensor upstream of the second point of use dispenser, (b) a total organic carbon detector upstream of the second point of use dispenser, or (c) both (a) and (b).
Clause 25. The water purification module of clause 24, wherein the water purification module is configured for operation so as to dispense the second water at the second point of use dispenser.
Clause 26. The water purification module of any one of clauses 20-25, wherein the water purification module is configured for operation so as to communicate the second water to the tank and retain the second water in the tank.
Clause 27. The water purification module of clause 26, wherein the water purification module is configured for operation so as to communicate the second water from the tank into the first recirculation water flow path loop for treatment by the UV device so as to give rise to an enhanced second water.
Clause 28. The water purification module of clause 27, wherein the water purification module is configured for operation so as to dispense the enhanced second water at the first point of use dispenser.
Clause 29. A method of operating a water purification module, comprising:
   introducing an input water to a first water recirculation flow path loop that comprises a holding tank and an UV device,
   circulating the first water to the ultraviolet radiation source at least twice so as to give rise to a first water having a reduced total organic content; and
   retaining the first water in the holding tank.
Clause 30. The method of clause 27, wherein the input water undergoes at least one of pretreatment, reverse osmosis treatment, and packed bed treatment before introduction to the first water recirculation flow path loop
Clause 31. The method of any one of clauses 29-30, further comprising dispensing the first water at a first point of use dispenser.
Clause 32. The method of any one of clauses 29-31, further comprising communicating the first water to a second water recirculation flow path loop, the second recirculation flow path loop comprising a polisher column configured to receive first water from the first recirculation flow path and process the first water to give rise to a second water having reduced conductivity.
Clause 33. The method of clause 32, further comprising (a) dispensing the second water at a second point of use dispenser, (b) communicating the second water to the tank, or (c) both (a) and (b).
Clause 34. The method of clause 33, further comprising communicating the second water to the tank and communicating the second water from the tank into the first recirculation water flow path loop for treatment by the UV device so as to give rise to an enhanced second water.
Clause 35. The method of clause 34, further comprising dispensing the enhanced second water at the first point of use dispenser.

Various additional features and advantages of the invention will become more apparent to those of ordinary skill in the art upon review of the following detailed description of one or more illustrative embodiments taken in conjunction with the accompanying drawings.

### BRIEF DESCRIPTION OF THE DRAWINGS

The accompanying drawings, which are incorporated in and constitute a part of this specification, illustrate one or more embodiments of the invention and, together with the general description given above and the detailed description given below, serve to explain the one or more embodiments of the invention.
FIG. 1 is a schematic view of a water purification module in accordance with an embodiment of the present invention.
FIG. 2 is a schematic view of a water purification system with the water purification module of FIG. 1 in accordance with principles of the present invention.
FIG. 3 is a schematic view of an alternative water purification system with the water purification module of FIG. 1 in accordance with principles of the present invention.
FIG. 4 is a schematic view of a second alternative water purification system with the water purification module of FIG. 1 in accordance with principles of the present invention.
FIG. 5 provides exemplary, non-limiting data.

### DETAILED DESCRIPTION

Although the present invention will be described in connection with certain embodiments, the invention is not limited to practice in any one specific type of water purification system. It is contemplated that the invention can be used with a variety of water purification systems, including but not limited to purification systems providing purified water for end uses such as laboratories, drinking water, semiconductor fabrication, microbiology and molecular biology applications or other uses that require purified water with low TOC levels such as water used for preparation of standards particularly for TOC analysis. By low TOC levels, it is meant that the purified water has a total organic carbon content of less than 50 ppb, or less than 10 ppb, or less than 5 ppb or, more particularly, less than 2 ppb. The description of the invention is intended to cover all alternatives, modifications, and equivalent arrangements as may be included within the spirit and scope of the invention as defined by the appended claims. In particular, those skilled in the art will recognize that the components of the invention described herein could be arranged in multiple different ways.

Embodiments of the present invention are directed to a water purification module through which water is circulated to achieve a reduction in the TOC content of the water. More particularly, water circulated through the water purification module is repeatedly exposed to UV radiation that oxidizes organic contaminates in the water to reduce the TOC content of the water. The water purification module can form part of a water purification system having one or more point of use polisher columns. In that regard, water that is circulated through the water purification module bypasses the point of use polisher columns to minimize the accumulation of organics in the water from repeated exposure to the packed beds of the polisher columns. Circulation of water in this regard results in both water with low TOC levels (e.g., down to 2 ppb or lower) and an improved lifespan of the packed beds of the polisher columns. More particularly, as water circulation through the water purification module bypasses the packed beds of the polisher columns, consumption of the packed beds is minimized. Bypassing the packed beds of the polisher columns also reduces the contaminates or leachates observed in the water originating from the packed beds, such as sulfonated or aminated oligomers, carbon dioxide and preserves the purity of the water being circulated through the water purification system. Each of these benefits of the present invention will be described in further detail below.

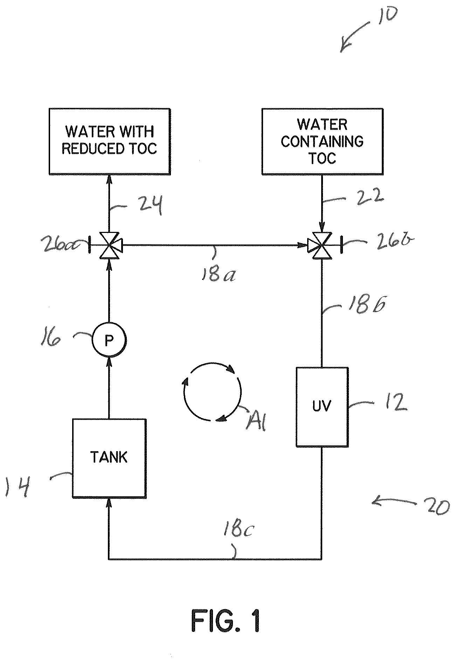

Referring now to FIG. 1, a water purification module 10 according to principles of the invention for producing TOC minimized or TOC free water is schematically shown. The water purification module 10 includes an ultraviolet radiation treatment device 12, a storage tank 14, and a pump 16 which are collectively coupled in fluid communication with appropriate fluid lines 18, such as tubing or piping, to define a fluid recirculation flow path loop 20. The water purification module 10 includes an inlet 22 configured to introduce a stream of feed water containing TOC into the fluid recirculation flow path loop 20 and an outlet 24 configured to dispense purified water with reduced TOC from the fluid recirculation flow path loop 20 of the water purification module 10. The feed water can have a TOC content that is greater than 100 ppb, for example. In any event, the outlet 24 can be a point of use product dispenser such as a tap, faucet, or dispense manifold configured to dispense a predetermined volume of purified water or the outlet 24 can be routed to other modules or polishers for further processing of the water, for example. The water purification module 10 can also include one or more valves 26a and 26b, such as 3-way manual or solenoid actuated valves, configured to direct the flow of water through the fluid recirculation flow path loop 20 as well as into or out from the water purification module 10, for example. Although not shown, the fluid recirculation flow path loop 20 of the water purification module 10 can include one or more various other components known in the art such as check valves, pressure sensors, flow conductivity sensors, flow restrictors, and filters, for example. The functionality of these various additional components will be well understood by those skilled in the water purification art and are therefore not described.

When purified water is not being dispensed from the water purification module 10 at the outlet 24 or being received into the water purification module 10 at the inlet 22, the water purification module 10 is designed to circulate water through the fluid recirculation flow path loop 20 as shown by directional arrows A1. More particularly, a volume of feed water containing TOC enters the fluid recirculation flow path loop 20 via the inlet 22. The valve 26 associated with the inlet 22 can be operated to permit a stream of feed water to enter the fluid recirculation flow path loop 20 of the water purification module 10, for example. A volume of water entering the inlet 22 can correspond to a desired volume of water to be held in the storage tank 14 or a volume purified water dispensed from the water purification module 10 at the outlet 24, for example. In any event, after a volume of feed water enters the water purification module 10, the water is directed to the UV treatment device 12 via a fluid line 18 fluidly connected to the valve 26b at the inlet 22 and the UV treatment device 12. As water passes through the UV treatment device 12, the water is exposed to UV radiation to oxidize organic contaminants in the water to reduce the TOC levels of the water. An output stream of purified water is directed from the UV treatment device 12 to the storage tank 14 via a fluid line 18 fluidly connected to the UV treatment device 12 and the storage tank 14. The storage tank 14 serves as a reservoir for receiving and holding the purified water having reduced TOC levels produced by the UV treatment device 12. The storage tank 14 can hold a volume of purified water produced by the water purification module 12, e.g., up to 25 L.

The pump 16 is positioned in the fluid recirculation flow path loop 20 and fluidly coupled between the tank 14 and the UV treatment device 12 with fluid lines 18. The pump 16, which can be a booster pump, for example, provides an adequate driving force to pump the purified water from the tank 14 to the UV treatment device 12. More particularly, the pump 16 directs the purified water from the storage tank 14 via a fluid line fluidly 18 connected to the tank 14 and the pump 16, and moves the water through fluid lines 18a, 18b, and 18c and back through the UV treatment device 12. The valve 26 associated with the outlet 24 is operable to direct the TOC minimized water stream from the pump 16 for recirculation back to the UV treatment device 12 or, alternatively, to the outlet 24. The pump 16 provides an adequate driving force to both circulate purified water through the fluid recirculation flow path loop 20 as well as dispense purified water from the water purification module 10 at the outlet 24. To this end, circulation of purified water by the pump 16 through the fluid recirculation flow path loop 20, and more particularly between the UV treatment device 12 and the tank 14, is repeated to reduce TOC levels of the water to produce TOC minimized water having TOC levels of down to 2 ppb or less. It should be noted that the components can be rearranged for example pump 16 could be placed in line 18b and this way the pump routes the incoming water through the UV and facilitates the recycle in conjunction with valve 26a and b. Thus multiple configurations are feasible.

The water purification module 10 illustrated in FIG. 1 is exemplary of but one configuration of the purified water module 10, and it is understood that certain features of the water purification module 10 can be rearranged within the fluid recirculation flow path loop 20 to also produce purified water with low TOC levels as described above. In that regard, the pump 16 can alternatively be fluidly coupled between the UV treatment device 12 and the tank 14 with appropriate fluid lines 18 so as to be downstream of the UV treatment device 12 and upstream of the tank 14, for example. In one embodiment, the water purification module 10 can have one or multiple outlets, such as point of use dispensers, arranged at different locations along the fluid recirculation flow path loop 20. For example, one outlet can be located between the UV treatment device 12 and the tank 14 such that purified water leaving the UV treatment device 12 can be dispensed from the water purification module 10 before reaching the tank 14. This outlet can be in addition to the outlet 24 shown in FIG. 1, or as an alternative.

Testing was run on a prototype of the water purification module 10 according to the embodiment described above with respect to FIG. 1 to evaluate the potential improvements in TOC levels observed from recirculating water through the UV treatment device 12 of the water purification module 10 over a period of time. Before beginning the test, a volume of tap water was pretreated with a RO unit to remove dissolved ions, typically in the form of dissolved salts, from the volume of tap water. The pretreated volume of tap water, also referred to as RO permeate, was then introduced into the water purification module 10 for testing. The water purification module 10 was equipped with a TOC Sievers 500 RLe TOC analyzer, commercially available from GE Analytical Instruments Inc. (Boulder, CO), configured to measure the TOC levels of the water over the duration of the testing. During the testing, water was recirculated through the fluid recirculation flow path loop 20 of the water purification module 10 by the pump 16, as described above, at various flow rates ranging from 0.2 L/min to 0.5 L/min for a duration of approximately 10 hours. After 10 hours of recirculation, the TOC levels in the water were reduced down to 0.03 µg/L (i.e., 0.03 ppb). In one embodiment the purified water is discharged as a low TOC water for custom applications that required certain water purity. In another embodiment the purified water was then discharged from the water purification module 10 through packed beds comprising mixed bed and carbon-based materials after which the TOC levels of the purified water were again measured. After being discharged through the packed beds, the TOC levels of the water were roughly 2 µg/L with a resistivity of greater than 18.2 Mohm/cm thus meeting the ASTM type I ionic requirement. Thus high purity water can be generated with very low TOC content in the described embodiments. It should be understood that water purification module 10 can be combined with an existing ion exchange and/or an existing carbon bed for use as a point of use polisher for generating pure water with comparatively low levels of TOC when fed with RO or treated water. Without being bound to any particular theory or embodiment, by reference to FIG. 1, the water with reduced TOC that is supplied from outlet 24 can be communicated to a packed bed and then to a dispenser. It should be noted that the device of FIG. 1 can also include a detector (not shown) as described above.

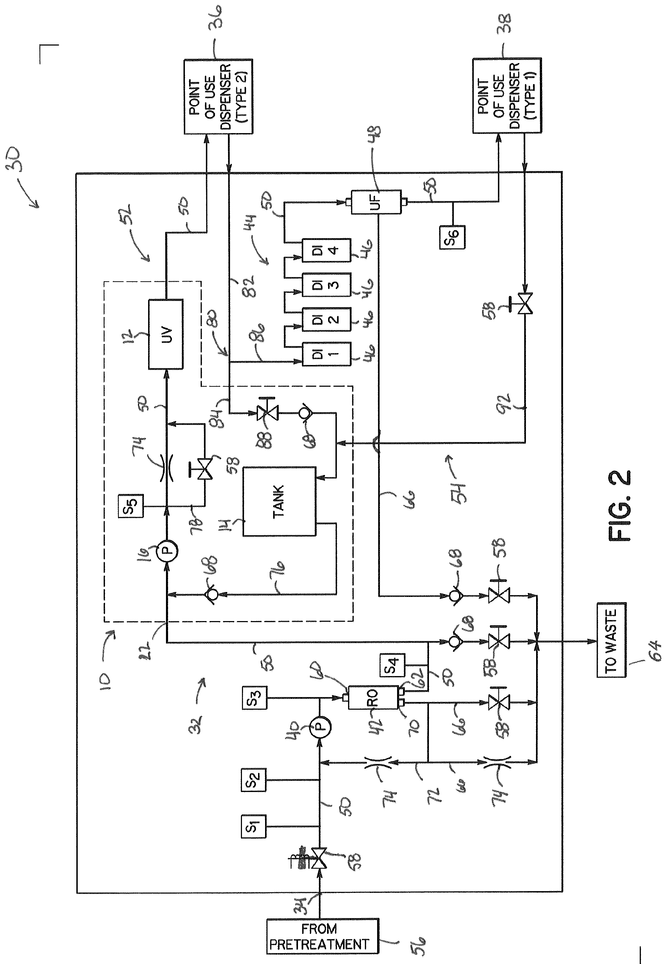

With reference to FIG. 2, in which like reference numerals refer to like features in FIG. 1, a water purification system 30 including the water purification module 10 according to principles of the invention for producing high-purity water is schematically shown. The water purification system 30 purifies water flowing through a water flow path 32 between an inlet 34 and a first point of use dispenser 36 (which can be optional) and a second point of use dispenser 38. More particularly, the water purification system 30 includes a first pump 40, a RO device 42, a second pump 16, an ultraviolet radiation treatment device 12, a polisher column 44 having at least one packed bed filter device 46, optionally a filtration ("UF") device 48 (which can be omitted or can be replaced by a valve that directs flow to line 50 and/or line 66, as shown in FIG. 2), and a tank 14 fluidly connected in the water flow path 32 by appropriate fluid lines 50.

As shown in FIG. 2, the water purification module 10 defines a first recirculation water flow path loop 52 that forms part of the water flow path 32 of the water purification system 30. The first recirculation water flow path loop 52 is defined by water flow being circulated one or more times through the pump 16, the UV radiation treatment device 12, the first point of use dispenser 36 (which is optional), and the tank 14, in series. To this end, the first recirculation water flow path loop 52 includes the first point of use dispenser 36 from which RO water with low TOC values (or other product) can be dispensed. The water purification system 30 also includes a second recirculation water flow path loop 54 defined by water flow being circulated one or more times through the pump 16, the UV radiation treatment device 12, the (optional) first point of use dispenser 36, the at least one packed bed filter device 46 of the polisher column 44, the optional UF device 48, the second point of use dispenser 38, and the tank 14, in series. The second recirculation water flow path loop 54 includes the second point of use dispenser 38 from which ASTM Type I purified water with low TOC values (or other product) can be dispensed. As described in further detail below, water flowing through the second recirculation water flow path loop 54 is exposed to the packed bed(s) 46 of the polisher column 44 while water flowing through the first recirculation water flow path loop 52 is not. Because water in the water purification system 30 cannot be stagnant for a long period of time in any portion of the water flow path 32, water is continuously circulated through the first and second recirculation water flow path loops 52, 54. It should be understood that a system according to the present disclosure can be configured such that first and second recirculation water flow path loops 52, 54 are independently operable such that water circulates within one of the two water flow path loops without circulating in the other. As but one example, first recirculation water flow path loop can operate - e.g., with water recirculating between tank 14 and UV device 12 - such that the water does not enter the second recirculation water flow path loop. It should also be understood that first and second recirculation water flow path loops 52, 54 can be operated at the same time. As an example, water can recirculate between tank 14 and UV device 12 in the first recirculation water flow path loop, with some water also being directed to the second recirculation water flow path loop. Alternatively, water can be directed from the first recirculation water flow path loop to the second recirculation water flow path loop, e.g., via closure of valve 88 in FIG. 2.

With continued reference to FIG. 2, feed water entering the inlet 34 to the water flow path 32 of the water purification system 30 can be pretreated. In that regard, there can be a pretreatment stage 56 upstream of the water purification system 30 where tap water is pretreated. In one embodiment, the pretreatment stage 56 can form part of the water purification system 30. In either case, the pretreatment stage 56 is operative for removing particulate matter, organic compounds, free chlorine and other halogens from the tap water. The pretreatment stage 56 typically consists of depth filtering with a depth filter and filtering with an activated carbon filter element, for example. The depth filter incorporates a tortuous, random matrix of small fibers, such as cotton, cellulose, synthetic yarns, or meltblown polymer fibers, through which the feed water passes and upon which particulate matter suspended in the feed water is captured. The activated carbon filter element removes organic compounds and free chlorine and other halogens from the feed water stream. This is followed by a hardness removal step using a cartridge packed with anti-scalants and to ensure that there no precipitation occurring during the water treatment process. To this end, there can also be a chlorine removal step using carbon-based packing material as chlorine can inhibit proper operation of the RO device 42.

The pretreated feed water enters the purified water system 30 via the inlet 34 to the water flow path 32 which can have a solenoid valve 58 operable to control the flow of feed water into the purified water system 30. The feed water is pumped to the RO device 42 by the first pump 40 which is fluidly connected to an inlet 60 of the RO device 42 via a fluid line 50. The pump 40, which can be a booster pump, for example, elevates the water pressure of the feed water stream to a suitable operating pressure so as to provide an adequate driving force for the operation of the RO device 42. The fluid line 50 fluidly connecting the valve 58 with the pump 40 includes a feedwater pressure sensor Si and a feed water conductivity sensors S₂. The fluid line 50 fluidly connecting the pump 40 with the inlet 60 of the RO device 42 includes another feedwater pressure sensor S₃. While the outlet of the RO could have another sensor S4 in the permeate line. Feedwater pressure sensors S₁ and S₃ can be used to determine a pressure change across the pump 40 and can be used to control the pump 40 to achieve a suitable operating pressure for the operation of the RO device 42, for example.

The RO device 42 includes a permeate outlet 62 coupled in fluid communication by a fluid line 50 with the water flow path 32 for directing the permeate stream from the RO device 42 to the purified water module 10. The permeate stream leaving the RO device 42 can alternatively be directed to a waste collection 64 via a drain line 66, as shown. The drain line 66 can have a check valve 68 and a solenoid valve 70 operable to control the flow of the permeate stream to waste 64. The RO device 42 also includes a waste outlet 70 coupled in fluid communication by a drain line 66 with the waste collection 64 so that waste from the RO device 42, such as a concentrate stream enriched in dissolved ions, is directed to waste 64. The concentrate stream can also be recirculated back into the water flow path 32 of the water purification system 30 via a concentrate stream recirculation line 72 in fluid communication with the drain line 66 and the fluid line 50 upstream of the pump 40 to circulate the concentrate stream back through the RO device 42, as shown. The concentrate stream recirculation line 72 and the associated drain line 66 can include a flow restrictor 74. The invention contemplates that the RO device 42 can comprise a single RO element, multiple RO elements coupled in parallel for fluid communication, or multiple RO elements coupled in series for fluid communication. Each RO element of the RO device 42 includes a thin semipermeable membrane operative for removing dissolved ions, typically in the form of dissolved salts, from the feed stream received from the pretreatment stage 56.

The permeate stream leaving the RO device 42 enters the water purification module 10 and specifically the pump 16 of the water purification module 10. To detect the concentration of ions in the permeate stream leaving the RO device 42, the fluid line 50 fluidly connecting the permeate outlet 62 with the pump 16 includes a permeate stream conductivity sensor S₄. As shown, the permeate stream mixes with a stream of purified water leaving the storage tank 14 near the inlet 22 of the purified water module 10. More particularly, a tank outlet fluid line 76 and the fluid line 50 carrying the permeate stream merge to form one fluid line 50 fluidly connected to an inlet of the pump 16. The mixed water stream, otherwise referred to as purified water, is then circulated through the flow path 32 of the water purification system 30 by the pump 16 which provides an adequate driving force to move the purified water through the fluid flow path 32 of the water purification system 30. As described in further detail below, the pump 16 both circulates water through the first recirculation water flow path loop 52 of the water purification system 30 as well as the second recirculation water flow path loop 54 of the water purification system 30.

The pump 16 is fluidly connected to the UV treatment device 12 with a fluid line 50 and the UV treatment device 12 can be fluidly connected to the first point of use dispenser 36 with a fluid line 50. The fluid line 50 fluidly connecting the pump 16 with the UV treatment device 12 includes a flow restrictor 74 as well as a fluid line 78 that bypasses the flow restrictor 74. Water flow through the bypass fluid line 78 is controlled by a solenoid valve 58. A pressure sensor S₅ configured to detect a pressure of the water being flowed or recirculated through the purified water system 30 is located in the fluid line 50 and between the pump 16 and the UV treatment device 12, for example. As described above, the UV treatment device 12 removes organics from the permeate stream to produce purified water of a certain quality, which can be dispensed from the first point of use dispenser 36 when such a dispenser is present. The first point of use dispenser 36 can be the outlet 24 described above with respect to FIG. 1, for example, and can be a tap, faucet, or dispense manifold configured to dispense a predetermined volume of purified water. In one embodiment, the first point of use dispenser 36 can include one or more additional taps, faucets, or dispense manifolds for dispensing RO water.

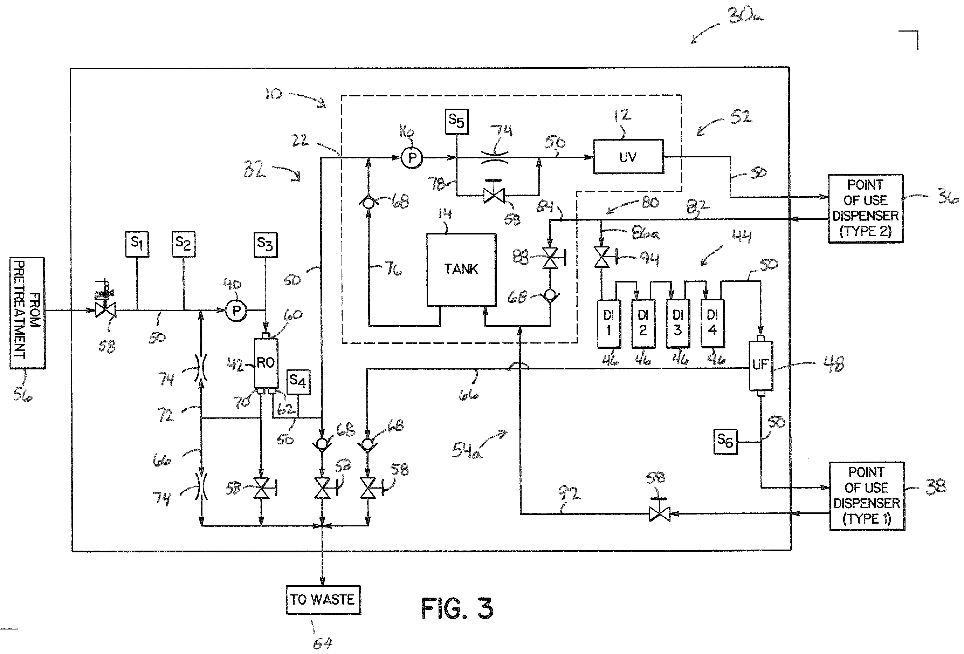

As shown in FIG. 2, the first point of use dispenser 36 is fluidly connected to the storage tank 14 and the polisher columns 44 with a fluid line having a section 80 (which can be a 3-way fitting or other valving), configured to separate the flow of purified water that is not dispensed at the first point of use dispenser 36 between the first recirculation water flow path loop 52 and part of the second recirculation water flow path loop 54. More particularly, the section 80 can define an inlet fluid line 82 in fluid communication with an outlet of the first point of use dispenser 36, a first outlet fluid line 84 in fluid communication with the tank 14, and a second outlet fluid line 86 in fluid communication with an inlet to the polisher column 44. To this end, the first outlet fluid line 84 directs a stream of purified water to the tank 14 and the second outlet fluid line 86 directs a stream of purified water to the polisher column 44. It should be understood, however, that water dispensed from the UV treatment device 12 can be communicated to the second water recirculation flow path loop 54 without first being communicated to (and/or through) the first point of use dispenser 36. As an example, a system according to the present disclosure can include a line (not shown in FIG. 2 or FIG. 3) that communicates water that has been treated by ultraviolet treatment device 12 to dispenser 38 (or first to optional filtration device 48) without the water also passing through polishing column 44. In this way, a user can make available water that has been UV-treated without the water first passing through polishing column 44. In standard systems a bypass line is usually provided to test the system without the polisher columns 44 and this line can be used in the above embodiment.

The inlet fluid line 82 and the first outlet fluid line 84 fluidly connect the tank 14 with the first point of use dispenser 36 such that a first stream of purified water that is not dispensed at the first point of use dispenser 36 is directed to the tank 14 for collection. As shown, the first outlet line 84 includes a first valve 88 fluidly connected in the first outlet line 84 so as to be part of the first recirculation water flow path loop 52. The first valve 88 is downstream from the distribution section 80 (which can comprise a T-junction and/or valving) for controlling the flow of purified water through the first recirculation water flow path loop 52 via the first outlet line 84 by interrupting or preventing the flow of water through the second recirculation water flow path loop 54 via the second outlet line 86. The first valve 88 can be a manual or solenoid actuated valve, for example. The first outlet line 84 can further include a check valve 68 fluidly connected in the first outlet line 84 downstream of the first valve 88, for example. The tank outlet fluid line 76 is fluidly connected between an outlet of the tank 14 and the fluid line 50 configured to carry the permeate stream into the purified water module 10 such that purified water stored in the tank 14 can be circulated back through the first and second recirculation water flow path loops 52, 54, as described in further detail blow. To this end, the tank outlet line 76 can include a check valve 68 to prevent fluid backflow into the tank 14, for example.

The inlet fluid line 82 and the second outlet fluid line 86 defined by the distribution section 80 fluidly connect the polisher column 44 with the first point of use dispenser 36 such that a second stream of purified water that is not dispensed at the first point of use dispenser 36 enters the polisher column 44. As briefly described above, the polisher column 44 includes one or more filter packed bed filter devices 46 which comprise mixed bed ion exchangers and carbon packed materials configured to remove ionic impurities from the water and organics such as oxidized organics, to minimize resistivity problems with the water dispensed from the water purification system 30. The polisher column 44 is fluidly connected to optional UF device 48 (when present) with a fluid line 50 such that water leaving an outlet of the polisher column 44 enters the optional UF device 48. The optional UF device 48 includes one or more membrane filters and is operative to remove suspended solids and solutes of high molecular weight from the purified water stream. The optional UF device 48 further includes a drain line 66 in fluid communication with UF device 48 and the waste collection 64, as shown. The drain line 66 can have a check valve 68 and a solenoid valve 58 operable to control the flow of waste from the optional UF device 48 to waste 64.

The optional UF device 48 is fluidly connected to the second point of use dispenser 38 with a fluid line 50 which can include a water conductivity sensor S₆ and/or a TOC detector; the TOC detector can be upstream of, downstream of, or co-located with the water conductivity sensor. The purified water leaving the optional UF device 48 is of a certain quality, such as ASTM Type I water, for example, which can be dispensed from the second point of use dispenser 38. The second point of use dispenser 38 can be a tap, faucet, or dispense manifold configured to dispense a predetermined volume of purified water. In one embodiment, the second point of use dispenser 38 can include one or more additional taps, faucets, or dispenser manifolds for dispensing ASTM Type I purified water. An outlet of the second point of use dispenser 38 is fluidly connected with the first outlet fluid line 84 via a return fluid line 92 which is in turn connected to the tank 14. The mixed flow of purified water then enters the storage tank 14 to then be recirculated through the purified water system 30.

With continued reference to FIG. 2, operation of the purified water system 30 will now be described. In use, a stream of feed water from the pretreatment stage 56 enters the water flow path 32 of the water purification system 30 via the inlet 34. The pump 40 moves the feed water through the RO device 42 which removes dissolved ions and dissolved organic matters from the feed stream arriving from the pretreatment stage 56, as boosted in pressure by the booster pump 40. The permeate stream leaving the RO device 42 is directed to the purified water module 10 where the pump 16 proceeds to direct the permeate stream, which can be a mixed stream of water, through the UV treatment device 12 and to the first point of use dispenser 36. As described above, the UV treatment device 12 removes organic contaminates in the water stream to reduce the TOC content of the water. The stream of purified water that is not dispensed from the first point of use dispenser 36 is separated at the distribution section 80 between the first recirculation water flow path loop 52 and a portion of the second recirculation water flow path loop 54 that contains the polisher column 44, optional UF device 48, and the second point of use dispenser 38. In particular, the distribution section 80 can separate the stream of purified water leaving the first point of use dispenser 36 into a first stream of purified water flowing through the first outlet fluid line 84 and having a first volumetric flow rate and a second stream of purified water flowing through the second outlet fluid line 86 and having a second volumetric flow rate. The distribution section 80 can be configured to distribute some or all of the water to the first recirculation water flow path loop and/or to distribute some or all of the water to the second recirculation water flow path loop.

The first stream of purified water is directed from the distribution section 80 back to the tank 14 for storage via the first outlet fluid line 84, thereby bypassing the packed bed filter device(s) 46 of the polisher column 44, the optional UF device 48, and the second point of use dispenser 38 of the second recirculation flow path loop 54. It should be understood that system 30 can be arranged such that water that is treated by UV device 12 bypasses polisher column 44 and is communicated to filtration device 48 without first being processed by polisher column 44. The volumetric flow rate of the first stream of purified water corresponds to a volume of purified water being recirculated through the first recirculation water flow path loop 52 per a unit of time. The second stream of purified water is directed from the distribution section 80 to the polisher column 44 via the second outlet fluid line 86, and the volumetric flow rate of the second stream of purified water corresponds to a volume of purified water being recirculated through the second recirculation water flow path loop 54 per a unit of time. The second stream of purified water flows through the polisher column 44, the optional UF device 48, and to the second point of use dispenser 38 where it can be dispensed. Purified water that is not dispensed from the second point of use dispenser 38 is directed to the storage tank 14 via return line 92 to be recirculated through the purified water system 30 in the manner described above.

To produce purified water having TOC levels of 2 ppb or less, which can be dispensed at the first or the second point of use dispensers 36 and 38 (respectively), for example, it can be beneficial to ensure that the first recirculation water flow path loop 52 have a larger volume flow rate of purified water recirculated therethrough compared to the second recirculation water flow path loop 54. For example, the incoming water when routed out of the reversed osmosis module is flowing at flow rate of 0.15 L/min. The output from the RO is routed to the Tank 14

The feed water flow rate can vary from up to about 3 L/min and when fed into the RO membrane will translate into a permeate feed up to 2 L/min or below. More preferably the feed water flow rate is about 1.3L/min and the permeate feed out of the RO is about 0.3L/min while the concentrate feed is about 1L/min In this setup the tank will be filled at 0.3L/min. The water from the RO permeate will be routed through the UV lamp and will be diverted into the packed bed columns and routed via the filtration module to the water storage tank. Once the storage tank is filled to the programmed level the water is now available per the present invention for the first cycle through the UV treatment to oxidize species and the effluent from the UV treatment is routed back to the storage tank for pursuing further treatments. This back-and-forth cycling can be pursued continuously via a solenoid control 88 when the solenoid is in an open state facilitating transport of the water preferentially through the line 84 to the tank. In one preferred embodiment the water can be recycled continuously until the second recirculation pathway is configured. Typically the second recirculation has a cycle of 10-15 minutes every two hours to ensure that there is no water stagnation occurring in the design. The first recycle configuration will stop when the second cycle is invoked. The first recycle can have a programmed time per hour with a minimum of less than 10 minutes for water that is low in TOC to continuous operation when the incoming water has higher levels of TOC. The first recycle operation is expected to lower the TOC level and with a TOC sensor inline one could easily measure the TOC level and continue recycle operation until the desired TOC level is reached. It should be noted that the first recycle configuration could be the only flow pathway and the water can be dispensed from the first dispenser as RO water but with low TOC levels as per the present invention. The TOC level can preferably be lower than 2 ppb and more preferably lower than 1 ppb.

The stream of purified water being circulated through the first recirculation water flow path loop 52 is not exposed to the packed bed(s) 46 of the polisher column 44, thereby preserving the TOC levels of the water, as described above. Further, because water in the water purification system 30 cannot be stagnant for a long period of time in any portion of the water flow path 32, it is preferable to maintain a minimum volume flow rate of purified water through the portion of the second recirculation water flow path loop 54 that includes the polisher column 44, optional UF device 48, and the second point of use dispenser 38. The volume flow rate can be increased in the event purified water is dispensed from the second point of use dispenser 38, for example.

The first valve 88 is operable to route the volume flow rate of purified water recirculated through the first recirculation water flow path loop 52. For example, operating the valve 88 to a substantially opened, or full open, position permits a larger volume flow rate of purified water through the first recirculation water flow path loop 52 compared to when the valve 88 is operated to a more closed position which reduces the volume flow rate of purified water through the first recirculation water flow path loop 52. Operation of the first valve 88 can also influence the volume flow rate of purified water through the second recirculation water flow path loop 54. For example, operating the valve 88 to a substantially opened, or full open, position results in a lower volume flow rate of purified water through the second recirculation water flow path loop 54 compared to when the first valve 88 is operated to a more closed position which increases the volume flow rate of purified water through the second recirculation water flow path loop 54. For example, with valve 88 substantially closed, more than 99% of total flow can flow through line 86 compared to line 76. With value 88 substantially open, more than 99% of total flow can flow through line 76 compared to line 86. It should be understood that valve 86 can be completely closed, completely open, and also partially open, i.e., open to permit some amount of fluid passage. In a first example use mode, a system according to the present disclosure can be operated such that tank 14 is filled with water processed by RO device 42 and then by UV device 12 without the water necessarily also being processed by polishing column 44. This water can, depending on the user's needs, be pumped out of tank 14, be further processed by UV device 12 if desired, be recirculated among tank 14 and UV device 12 if desired, and be dispensed at dispenser 36 as RO water but with reduced TOC. This can be accomplished by, e.g., operating the system and opening valve 88 such that UV-treated water is communicated to tank 14 without first passing through polishing column 44. The water can then be pumped out of tank 14, treated by UV device 12, and dispensed at dispenser 36. In a second use mode, water treated by RO device 42 (and optionally by UV device 12) is stored in tank 14. The water can then be pumped out of tank 14, be treated by UV device 12, e.g., in a recirculating manner, be routed to polisher column 44 (and optionally to filter device 48, which filter device is also optional) and be dispensed at dispenser 38, e.g. as ASTM Type I water. In a third use mode, water treated by RO device 42 is treated by ion exchange and/or carbon packed beds and held in tank 14. The water can then be pumped from tank 14, treated by UV device 12, e.g., in a recirculating manner, and dispensed at dispenser 36 as water that has improved purity and a low level of TOC. In a fourth use mode, a system according to the present disclosure can be operated such that water is processed by RO device 42 and then by UV device 12. Such water can optionally be stored in tank 14. The water can be recirculated between tank 12 and UV device 12, and the water can also be further processed (e.g., by closing valve 88 in FIG. 2) by polisher column 44 and optionally by filtration device 48. The resulting treated water can be communicated to dispenser 38 for dispensing. As shown, the resultant treated water (which can be characterized as ASTM Type I water) can also be communicated via line 92 to tank 14. In some embodiments, the treated water can bypass dispenser 38 and is communicated to tank 14 from polisher column 44 or, if the water is treated by filtration device 48, the water is communicated to tank 14 from filtration device 48. Such water can, after being returned to tank 14, be considered a RO plus or RO treated water (as the water has been UV- treated and treated by polisher column 44). Such water can then be encouraged from tank 14, treated by UV device 12, and then dispensed at dispenser 36. It should be understood that a system can be arranged to as to be switchable between operation in one, two, or more of the foregoing example use modes.

By further reference to FIG. 2, a system according to the present disclosure can comprise a controller, which controller can be configured to modulate fluid flow within the system. Such a controller can be configured to operate the system in any one or more of the use modes previously described and convert the system's operation from one mode to another. As a non-limiting example, the controller can be configured to open valve 88 in FIG. 2 such that water treated by RO device 42 and UV device 12 is communicated to tank 14 without the water also being treated by polisher column. The water can be held in tank 14, and the controller can then effect operation of the system to effect recirculation of the water within flow path loop 52 with valve 88 open. The controller can be configured to close valve 88 so that water communicated from tank 14 is treated by UV device 12 and then routed to polisher column 44. A controller can also be configured to modulate fluid flow such that water treated by UV device bypasses one or both of polisher column 44 and filtration device 48 before that water is routed to tank 14. A controller can be configured to modulate the operation of valve 58, which can be modulated to permit or deny water flow from dispenser 38 back to tank 14. As described elsewhere herein, a system according to the present disclosure can be configured such that water leaving filtration device 48 and/or polisher column can be routed to tank 14 and bypasses dispenser 38. This can be accomplished by, e.g., having a valve and related fluid lines that communicates water in section 80 to filtration device 48; a controller can be configured to modulate such a valve. A system according to the present disclosure can be configured such that water leaving polisher column 44 is routed to dispenser 38 and bypasses filtration device 48. This can be accomplished by, e.g., having a valve and related fluid lines that communicate leaving polisher column 44 to dispenser 38 and/or to tank 14, and a controller can be configured to modulate such a valve.

Referring now to FIG. 3, wherein like numerals represent like features in FIGS. 1 and 2, details of an alternative embodiment of a water purification system 30a including the water purification module 10 according to principles of the invention for producing high-purity water is schematically shown. A difference between the water purification system 30a of this embodiment and the water purification system 30 of the previously described embodiment is that a second valve 94 is fluidly connected in the second outlet fluid line 86a so as to be part of the second recirculation water flow path loop 54a. As shown in FIG. 3, the second valve 94 is downstream from the distribution section 80 for controlling the flow of purified water through the second recirculation water flow path loop 54a without interrupting or preventing the flow of purified water through the first recirculation water flow path loop 52. The second valve 94 can be a manual or solenoid actuated valve, for example. The second valve 94 is operable to adjust the volume flow rate of purified water flowing through the recirculated through the second recirculation water flow path loop 54a. As described elsewhere herein, a system according to the present disclosure can include a controller configured to modulate the operation of one or more valves of the system; the controller can also be configured to modulate the operation of one or more pumps. By reference to FIG. 3, the system 30a can include a controller configured to operate valve 88 so as to direct water to polisher column. The aforementioned controller or another controller can also be configured to modulate the operation of valve 94. In this way, the controller can modulate water flow within the first recirculation water flow path loop 52 and the second recirculation water flow path loop 54a. The controller can be configured to convert the system's operation from one more to another; operation modes can include those described in connection with FIG. 3. The system of the present invention can also include a detector for detecting the TOC level and preferably the detector is located after the optional filtration and before the point of use dispenser 38. Optionally an additional detector can also be deployed in the fluidic line ahead of the dispenser 36.

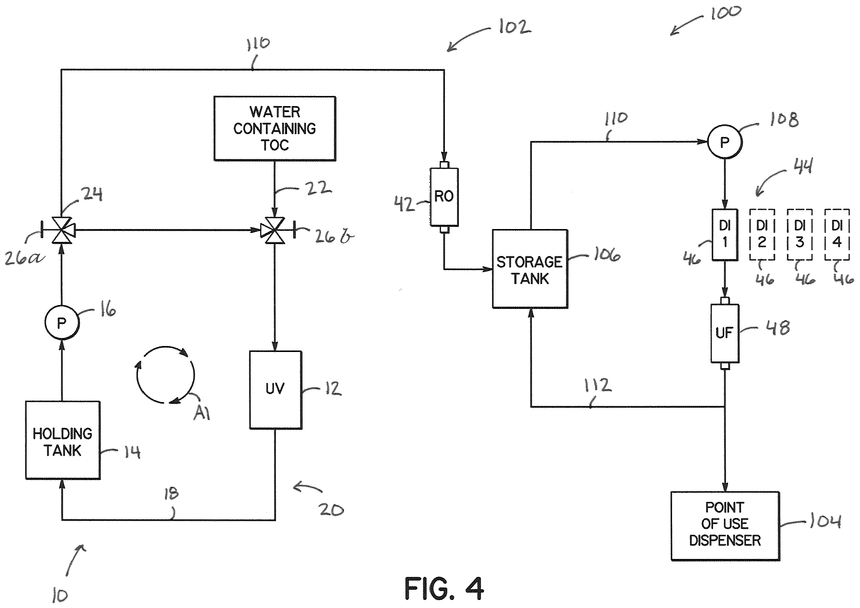

With reference to FIG. 4, in which like reference numerals refer to like features in FIGS. 1 and 2, a water purification system 100 including the water purification module 10 according to principles of the invention for producing high-purity water is schematically shown. The water purification system 100 purifies water flowing through a water flow path 102 between an inlet 22 and a point of use dispenser 104 which can be a tap, faucet, or dispense manifold configured to dispense a predetermined volume of purified water, for example. More particularly, the water purification system 100 includes a UV treatment device 12, a first tank 14, a first pump 16, a RO device 42, a second tank 106, a second pump 108, a polisher column 44 having at least one packed bed filter device 46, and an optional UF device 48 fluidly connected in the water flow path 102 by appropriate fluid lines 110. The system of the present invention can also include a detector for detecting the TOC level and preferably the detector is located after the optional filtration and before the point of use dispenser 38. Optionally an additional detector can also be deployed in the fluidic line ahead of the dispenser 36.

During water purification, the presence of TOC in the water stream can adversely impact the performance of the membrane of the RO device 42. To maximize the lifetime and operation of the RO membrane and other consumables of the water purification system 100, such as packed bed(s) 46 of the polisher column 44, it is beneficial for the TOC content of the feed water to have low TOC levels, such as 2 ppb or less, for example. In that regard, the water purification module 10 forms part of the water flow path 102 of the water purification system 100 and is located upstream of the RO device 42, polisher column 44, and optional UF device 48. As a result, feed water is able to be circulated through the water purification module 10, as indicated by directional arrows A1 and described above with respect to FIG. 1, to reduce the TOC content of the recirculated water to produce purified water having TOC levels of down to 2 ppb or less. A volume of purified water is held in the storage tank 14 to be supplied to the point of use dispenser 104, as described in further detail below.

In use, a stream of feed water, which can be pretreated in a pretreatment stage upstream of the water purification system 100, is provided to the water purification system 100 through the inlet 22 to the water purification module 10. The valve 26b associated with inlet 22 is operable to introduce a desired volume of feed water into the water purification system 100. The feed water has enough pressure to both overcome the back pressure of the UV treatment device 12 and to fill the holding tank 14 to the desired level. The feed water is then recirculated a number of times through the water purification module 10 to produce purified water of a certain quality, such as purified water having TOC levels of down to 2 ppb or less, for example.

The valve 26a associated with the outlet 24 is operable to direct the purified water stream from the pump 16 for recirculation back to the UV treatment device 12 or, alternatively, to the RO device 42 via the outlet 24. After the TOC level of the water is reduced to a desired level, the valve 26a associated with the outlet 24 is operated to flow a stream of purified water through the fluid line 110 fluidly connecting the valve 26a with the RO device 42. In this regard, the pump 16 elevates the water pressure of the feed water stream to a suitable operating pressure so as to provide an adequate driving force for the operation of the RO device 42. The permeate stream leaving the RO device 42 is directed to the second storage tank 106 for storage as TOC-minimized water that can be subsequently dispensed from the point of use dispenser 104 as high-purity, laboratory-quality water, such as ASTM Type I water having TOC levels down to 2 ppb or less, as described in further detail below. Because the RO device 42 can have a limited throughput, the RO permeate flow rate from the RO device 42 is limited and can be less than a desired dispensing output flow rate at the point of use dispenser 104, for example. Thus, the second storage tank 106 operates as a holding or storage tank to compensate for the limited flow throughput of the RO device 42.

The second pump 108 provides an adequate driving force to pump TOC minimized water from the holding tank 106 through the at least one packed bed filter device 46 of the polisher column 44, the optional UF device 48, and to the point of use dispenser 104 where a volume of purified water can be dispensed from the purified water system 100. More particularly, the pump 108 directs the purified water from the storage tank 106 via a fluid line 110 fluidly coupled to the tank 106 and the pumps the water to the polisher column 44, the optional UF device 48, and to the point of use dispenser 104. A quantity of purified water not dispensed at the point of use dispenser 104 can be recirculated back to the storage tank 106 through a recirculation fluid line fluid line 112, as shown. Because water in the purification water system 100 cannot be stagnant for a long period of time in any portion of the water flow path 102, purified water can be periodically recirculated from the tank 106 through the pump 108, the polisher column 44, the optional UF device 48, and back to the tank 106 via the recirculation fluid line 112 as needed to preserve the quality of the purified water. It is also conceivable to add a UV lamp similar to 12 in the line 110 and a valve (not shown) that can be used to reduce the TOC even more before sending this back to the tank 106 or the valve (not shown) can route this back to the DI cartridges similar to the embodiment of FIG. 3. Thus many possibilities exist. Further, as described elsewhere herein, a system according to the present disclosure can include a controller configured to modulate the operation of one or more valves of the system; the controller can also be configured to modulate the operation of one or more pumps. By reference to FIG. 4, the system 100 can include a controller configured to operate any one or more of valves 26a or 26b as well as a pump or pumps so as to direct water flow within system 100. The system of the present invention can also include a detector for detecting the TOC level and preferably the detector is located after the optional filtration and before the point of use dispenser 38. Optionally an additional detector can also be deployed in the fluidic line ahead of the dispenser 36.

### Examples

The following examples are illustrative only and do not limit the scope of the present disclosure or the appended claims.

### Example 1

The setup of FIG. 2 was adapted for this example, and this example is illustrated by reference to FIG. 2. Tap water from Chelmsford, USA was pretreated per 56 and fed into the purification system at 34. The conductivity of the pretreated tap water was about 800 µS/cm. The water was pumped into a RO cartridge 60 at a flow rate of 1.5 L/min and the resulting permeate 62 was routed directly into the 30 L tank 14 by opening valve 88 of FIG. 2. The conductivity of the RO treated water was about 20 µS/cm. For TOC measurement, a Sievers 500 RLe analyzer from Veolia Water Technologies And Solutions, USA was used. The TOC analyzer operated at a flow rate of 50 mL/min and this portion of the water was sampled when analysis was needed from the point of use dispenser location 36 by connecting a "T" junction (not shown). After the tank was filled, as per the present invention, the pump 16 was pumped at a flow rate of 0.5 L/min to pump the contents of the tank 14 via the UV treatment device and via the valve 88 and routed back to the tank 14. By treating the water continuously as per the present invention very low TOC can be achieved in the water stream. To test this the water from the tank was recycled continuously for 10 hours and the resulting water was tested for TOC using the Sievers 500 RLe analyzer by routing the water via a Tee junction at the dispenser location. The measured TOC value was below 0.03 µg/L or ppb. Thus, as per the present invention reversed osmosis water with comparatively low TOC can be obtained and dispensed from the dispenser 36.

### Example 2

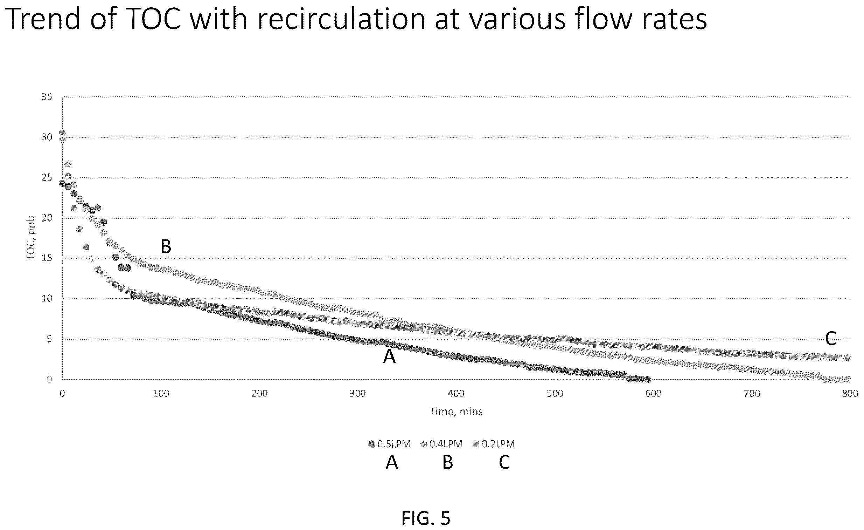

In this example, the setup of example 1 was used except the pump was operated at three flow rates, namely 0.5 L/min, 0.4 L/min and 0.2 L/min for three consecutive days of experimentation. Further, the TOC analysis was pursued continuously by sampling the water line at the dispenser location so that one could have a profile of how the TOC is reduced in the current configuration. The starting TOC value of the RO permeate was between 24 and 32 µg/L. The final TOC levels achieved were 0.03 µg/L for the 0.5 L/min flow rate after 10 hours of operation and the TOC level was below 1 µg/L for the 0.4 L/min flow rate after 13 hours of operation. The TOC level was much higher for the 0.2 L/min although an appreciable reduction of TOC can be perceived as shown in FIG. 5. Thus, as per the present invention the flow rate for the recirculation can be adjusted to achieve the shortest time for TOC reduction. As before, the TOC reduced water can be dispensed from dispenser 36. It should be noted that most water purifiers are idle during overnight non-work hours, and the disclosed concept of UV recirculation can be leveraged overnight per the present invention to provide water having comparatively low TOC levels.

### Example 3

In this example the TOC-reduced RO water from example 2 was routed via the polisher columns 44 after closing the valve 88. Because there are leachates present in the polisher columns, the level of TOC determined was higher than example 2 and was roughly at 2.1 µg/L. The TOC determination was pursued by moving the TOC measurement closer to the dispenser 38 via the T junction (not shown). Because the water was routed through the polisher columns, the water purity was high and was measured to be 18.2 M ohm cm⁻¹; thus it is possible to generate water with low levels of ions and organics via the disclosed technology.

### Example 4

The setup of FIG. 2 was used in this example. The RO treated water as before was routed to the tank but with the valve 88 closed. The RO treated water was treated by the UV device, followed by the polisher columns and then filtered by the ultrafiltration module and then routed via the point of use dispenser to the tank 14. The conductivity of the water was 18.2 M ohm cm⁻¹ however the TOC levels were higher than 20 µg/L. This water as per the present invention was routed via the UV and back to the tank with the valve 88 open. The polisher columns were bypassed during this period and the UV recycle was pursued for 2 hours. After the 2-hour period, the TOC level in the water was measured to be 1.7 µg/L. This water can be used for applications that do not require the 18.2 M ohm cm⁻¹ quality, and will have low TOC properties and can be dispensed from dispenser 36 if needed. In the same embodiment, the product water from the tank was dispensed from 38 via the polisher columns and ultrafiltration module with the valve 88 closed and the TOC level increased to about 2.5 µg/L but the water purity improved and was measured to be 18.2 M ohm cm⁻¹.

### Example 5

In this example the setup of FIG. 2 was used, with the exception that a bypass loop was added between line 86 and line 50 to bypass the polisher columns 44. In this setup, when the valve 88 is closed, the water is routed via the ultrafiltration filter module 48 and via the point of user dispenser 38 to the tank 14. In the simplest setup the RO treated water is routed via the UV device, the point of use dispenser 36, the bypass loop, the ultrafiltration module and the point of use dispenser 38 and via 92 to tank 14. When the pump is on the UV recycle is accomplished and reduction of TOC is perceived. The typical TOC measured for three different RO cartridges were well below 0.5 µg/L, with a resistivity of the water at greater than approximately 15 M ohm cm⁻¹. TOC reduction performance was no different when the valve 88 was open.

Although the invention has been illustrated by the description of various embodiments thereof, and although the embodiments have been described in considerable detail, it is not intended to restrict or in any way limit the scope of the appended claims to such detail. Thus, the various features discussed herein can be used alone or in any combination. Additional advantages and modifications will readily appear to those skilled in the art. The invention in its broader aspects is therefore not limited to the specific details and illustrative examples shown and described. Accordingly, departures can be made from such details without departing from the scope of the general inventive concept which is defined in the appended claims.

## Claims

1. A water purification module, the water purification module comprising:
a first recirculation water flow path loop in a water flow path and having an inlet, the first recirculation water flow path loop being in fluid communication with, and forming part of, the water flow path of the water purification module; and
a pump, an ultraviolet radiation treatment device, and a tank fluidly connected in the first recirculation water flow path loop;
wherein water that enters the inlet to the water flow path of the water purification system is circulated one or more times through the first recirculation water flow path loop of the water purification module by the pump so to generate an enhanced water having a reduced total organic content; optionally without exposing water that enters the inlet to an ion exchange medium and optionally wherein the first recirculation water flow path is free of ion exchange media,
the enhanced water having a reduced total organic content.

2. The water purification module of claim 1, wherein water entering the inlet to the water flow path of the water purification system has a total organic content that is greater than 10 parts-per-billion.

3. The water purification module of claim 1, comprising a first point of use dispenser, optionally located in the first recirculation water flow path loop between the ultraviolet radiation treatment device and the tank of the water purification module, and/or optionally configured to dispense the first water, the first water optionally having a total organic content of less than 10 parts-per-billion.

4. The water purification module of claim 3, further comprising:
at least one of a reverse osmosis device, at least one packed bed filter device, a filtration device, , and a second point of use dispenser fluidly connected in the water flow path; and
a second recirculation flow path loop defined by water flow being circulated one or more times through the pump and at least one of the ultraviolet radiation treatment device, the optional first point of use dispenser, the at least one packed bed filter device, the filtration device, , the second point of use dispenser, and the tank, the second recirculation water flow path loop being in fluid communication with, and forming part of, the water flow path of the water purification module;
wherein water flow through the water purification module bypasses the at least one packed bed filter device, the filtration device, and the second point of use dispenser of the second recirculation flow path loop.

5. The water purification module of claim 4, further comprising a distribution section fluidly connected in the water flow path of the water purification module, the section configured to distribute the flow of water flowing through the water flow path of the water purification module between the first recirculation water flow path loop and the second recirculation water flow path loop.

6. The water purification module of claim 5, wherein the distribution section comprises an inlet in fluid communication with an outlet of the ultraviolet radiation treatment device, a first outlet in fluid communication with an inlet to the tank, and a second outlet in fluid communication with at least one packed bed filter device.

7. The water purification module of claim 6, further comprising a first valve fluidly connected in the first recirculation water flow path loop for controlling the flow of water through the water purification module.

8. The water purification module of claim 7, wherein the first valve is located downstream of the section configured to distribute the flow of water through the water purification module by interrupting the flow of water through the second recirculation water flow path loop of the water flow path of the water purification module.

9. The water purification module of claim 4, wherein a duration of water recirculation time through the second recirculation water flow path loop is less than a duration of water circulation time through the first recirculation water flow path loop, and preferably the duration of water recirculation time through the second recirculation water flow path loop is no greater than 0.9 times the duration of the water recirculation time through the first recirculation water flow path loop.

10. The water purification module of claim 4, wherein water dispensed from the first point of use dispenser is at least of a similar ionic purity to ASTM Type II water having a total organic content of less than 10 ppb.

11. The water purification module of claim 4, wherein water dispensed from the second point of use dispenser is at least of a similar ionic purity to ASTM Type I water having a total organic content of less than 5 ppb and preferably less than 3 ppb.

12. The water purification module of any one of claims 3 to 11, further comprising one or both of a water conductivity sensor upstream of the second point of use dispenser, and a total organic carbon detector upstream of the first point of use dispenser.

13. The water purification module of any preceding claim, wherein the water purification module further comprises a reverse osmosis device, at least one packed bed filter device, and a filtration device fluidly connected in the water flow path such that water flows through the reverse osmosis device before flowing through the at least one packed bed filter device or the filtration device.

14. The water purification module of claim 12, wherein the second point of use dispenser is located in the water flow path downstream of the at least one packed bed filter device and the filtration device.

15. The water purification module of claim 7 or claim 8, further comprising a second valve fluidly connected in the second recirculation water flow path loop for controlling flow of water through the second recirculation water flow path loop, and optionally wherein the second valve is disposed downstream from the distribution section for controlling the flow of water through the second recirculation water flow path loop without interrupting the flow of water through the first water recirculation flow path loop.

16. The water purification module of any preceding claim, further comprising a controller configured to modulate water flow within the module.
